# EUROPEAN PATENT SPECIFICATION

(11) **EP 0 575 798 B1**
(45) Date of publication and mention of the grant of the patent: **05.11.1997**
(21) Application number: 93109059.1
(22) Date of filing: 04.06.1993
(51) Int. Cl.: C08J 7/04, C08J 7/18, B05D 3/06, B05D 3/14, H01H 13/14

(54) **Process for producing a finger-touch key for a manipulation switch**
Verfahren zur Herstellung einer Fingertaste für einen Handhabeschalter
Procédé pour la production d'une touche pour un interrupteur de manipulation

(30) Priority: 19.06.1992 JP 184640/92; 16.09.1992 JP 270721/92
(43) Date of publication of application: 29.12.1993
(73) Proprietor: FUJI POLYMERTECH CO., LTD, Chuo-Ku, Tokyo (JP)
(72) Inventor: Nakanishi, Yutaka, Kita-ku, Tokyo (JP); Sasaki, Yasushi, Kita-ku, Tokyo (JP)
(74) Representative: Fleuchaus, Leo, Dipl.-Ing.

(56) References cited:
- EP-A- 0 317 858
- DE-A- 2 022 052
- DE-A- 3 013 787
- US-A- 4 654 262
- DATABASE WPIL Derwent Publications Ltd., London, GB; AN 90-034460(05) & JP-A-1 313 580
- DATABASE WPIL Derwent Publications Ltd., London, GB; AN 82-89233E(42) & JP-A-57 147 527
- Enc. Polym. Sci. Eng., vol. 1, John Wiley and Sons, New York 1985, pp 490,491,497-500

## Description

### BACKGROUND OF THE INVENTION

The present invention relates to a process for producing a finger-touch key for a manipulation switch, in particular, in the form of a contactor rubber piece for, such as key boards of electronic devices, of a type in which the key top is made of a resin different from that of the key base; and to a contactor rubber piece fitted with such key top.

In the conventional practice, finger-touch keys or contactor rubber pieces are produced by fixing a molded key top piece, which is made of, usually, a transparent resin, such as an acrylic resin or ABS, using an adhesive, onto a separately molded key base piece, which is made of, for example, a silicone rubber for providing for a suitable solid but resilient finger touch feel of the key and is provided thereon with an adequate indication mark by, for example, printing. Here, it is unavoidable to realize the adhesion of the key top piece onto the key base piece by a physical means, since a chemical adhesion of the silicone resin of the key base piece with the art-different resin of the key top piece is difficult. Thus, the conventional practice of producing the finger-touch keys has been suffering from a lavorious and time-consuming work of piece-by-piece fixation of the key top piece onto the key base piece by a physical means. While a chemical bonding of the key top piece with the key base piece may be possible by employing a suitable resin material other than silicone resin for the key base piece, it becomes difficult to attain the verified solid but resilient finger touch feel of the key.

The problems associated with the mechanical fixation of the components of conventional finger touch keys are partially solved by DE-OS 30 13 787 and DE-OS 2 002 05.

From DE-OS 30 13 787 there is known a process for manufacturing a finger touch key comprising providing a key substrate with a UV-curable polyester resin layer and curing it with UV-radiation.

From DE-OS 2 002 052 there is known a process for improving the coatability of the surface of a polymer resin specimen in which UV radiation is applied to the surface and after that an organic silicon composition is applied.

### BRIEF DESCRIPTION OF THE DRAWINGS

Fig. 1 is a vertical section of a key base piece of a contactor rubber piece.

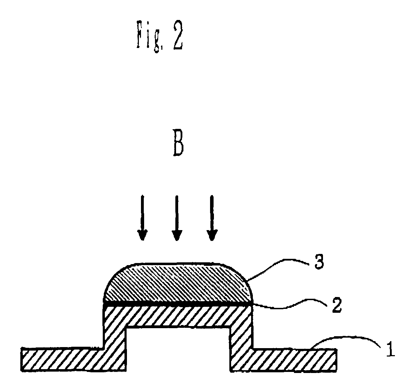

Fig. 2 is a vertical section of a finished composite contactor rubber piece according to the present invention.

### SUMMARY OF THE INVENTION

Thus, according to the present invention, it is contemplated to provide a novel process for producing a composite finger-touch key in which the key top layer is chemically bonded to the key base piece even when a silicone resin is employed for the key base piece, by using a resin material curable by UV-irradiation or by heating for the key top layer.

### DETAILED DESCRIPTION OF THE INVENTION

The above object is achieved according to the present invention by a process for producing a composite finger-touch key for a manipulation switch of a type in which the key top is made of a resin different from that of the key base piece, which process is characterized by treating the surface of the key base piece made of a silicone rubber to be bonded with the key top layer either by exposing to one or more short wave length UV-rays in the range of 150 nm - 270 nm or to a plasma discharge in order to subject the surface to a chemical activation, applying then a coupling agent based on silane, such as aminopropyl triethoxysilane, vinyl triethoxysilane and mercaptopropyl trimethoxysilane, to the so-treated surface of the key base piece, providing thereon with a layer of a resin curable by UV-irradiation or by heating, such as those based on, for example, acrylic, epoxy or silicone resin, of an adequate configuration and exposing the resin layer to a UV-irradiation or a heating to cause curing of the resin layer.

The chemical activation treatment of the key base piece surface by exposing it to one or more short wave length ultraviolet rays according to the present invention can be realized under the atmospheric condition using, a UV lamp of 150 nm to 270 nm, of higher output at a distance from the lamps of several cm for several minutes.

The chemical activation treatment of the key base piece surface by exposing it to a plasma discharge according to the present invention can be realized under the atmospheric condition using, for example, carbon electrodes at high output for several seconds.

The chemical activation according to the present invention is believed to form a hydroxyl groups over the surface of the key base piece by breaking the Si-O bonds of the silicone resin by the UV-irradiation and chemical binding of the resulting free radicals with ozone molecules formed by the UV-irradiation of oxygen and with water molecules present within the irradiation atmosphere. These hydroxyl groups will react with the subsequently applied silane coupling agent to form a group reactive with the UV-curable resin of the key top layer coated thereon to build up a chemical bond, whereby the bonding of the key top layer with the key base piece is improved and the fastness of the key is markedly increased.

The UV-irradiation may preferably be realized using two short wave length ultraviolet rays of which one serves for effecting the breaking of Si-O bonds of the silicone resin of the key base piece appearing on the surface thereof and, thus, has a wave length of about 250 nm and the other one serves for activating oxygen and building up ozone molecule and, thus, has a wave length of about 185 nm.

The hardening of the resin of the key top layer is realized by irradiation thereof with an ultraviolet ray of a wave length of, preferably, about 365 nm, when a UV-curable resin is employed therefor, or by heating thereof, when a heat curable (thermosetting) resin is employed therefor. In this manner, the so-cured key top resin layer is firmly fixed to the key base piece by chemical bonds. Thus, according to the present invention, the production of the finger-touch key can be realized by a simple and easy work within a very reduced processing period with simultaneous attainment of a quite improved fastness of the so-produced finger-touch key.

### DETAILED DESCRIPTION OF PREFERRED EMBODIMENTS

Below, the present invention will be described in more detail by way of Examples with reference to the appended Drawings.

### Example 1

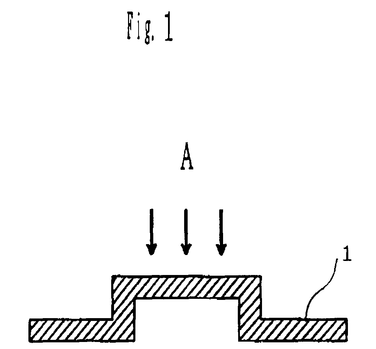

Using a key base piece of a silicone resin of a contactor rubber piece as shown in Fig. 1 by numeral 1, the top surface thereof was exposed to a UV-irradiation A. For this, a combination of two ultraviolet rays of a wave length of about 185 nm for serving for ozone formation and of a wave length of about 250 nm for serving for breaking the Si-O bonds of the silicone resin was employed. The exposure was effected at an irradiation distance of 20 mm from the UV-lamps for 10 minutes. Directly thereafter, a coupling agent 2 consisting of aminopropyl trimethoxysilane, which is liquid at ordinary temperature, was applied over the UV-treated surface in a thin layer using a glass rod and the coated layer was stood still for about 1 minute to dry it. To the so-treated surface, a green pasty mass of uncured resin of an urethane acrylate of "Three Bond 3003" of the firm Three Bond K.K. was applied in a form of swollen lens 3, which was then exposed to a UV-irradiation B with an ultraviolet ray of a wave elngth of about 365 nm from a UV-lamp for 10 min. to effect curing of the resin.

### Example 2

The procedures of Example 1 were repeated except that the surface treatment of the key base piece was effected by a colona discharge. The colona discharge treatment was carried out using Tantec Corona Generator HV05-2 with carbon electrodes under the atmospheric condition for 10 seconds.

### Example 3

A contactor rubber piece was produced by molding the key base piece thereof from a silicone resin, exposing the top face of the molded key base piece to a UV-irradiation with a combination of UV rays (185 - 250 nm) in a similar manner as in Example 1, coating the so-treated surface within 10 minutes thereafter with a layer of a thermosetting epoxy resin (ADEKAOPTON KT-960 of the firm Asahi Denka Kogyo K.K.) as an adhesive, placing thereon a preliminarily prepared key top piece made from a polycarbonate resin and heating the composite key body to effect curing of the epoxy resin adhesive layer.

### Example 4

A contactor rubber piece was produced by molding the key base piece thereof from a silicone resin, exposing the top face of the molded key base piece to a UV-irradiation with a combination of UV rays (185 - 250 nm) in a similar manner as in Example 1, coating the so-treated surface within 10 minutes thereafter with a layer of a UV-curing epoxy acrylate resin (XNR 5490 of the firm Ciba Geigy) as an adhesive, placing thereon a preliminarily prepared key top piece made from a polycarbonate resin and exposing the composite key body to a UV-irradiation to effect curing of the epoxy resin adhesive layer.

## Claims

1. A process for producing a composite finger touch key for a manipulation switch of a type in which the key top is made of a resin different from that of the key base piece, **characterized by** the steps of:
a) treating the surface of the molded key base made of a silicone rubber to be bonded with the key top layer either by exposing it to one or more short wavelength UV-rays in the range of 150 nm - 270 nm or by exposing it to a plasma discharge in order to subject the surface to a chemical activation,
b) applying then a coupling agent based on silane to the so-treated surface of the key base piece,
c) providing thereon a layer with an adequate configuration of a resin curable by UV-irradiation or by heating and
d) exposing said resin layer to a UV-irradiation or a heating to cause curing of said resin layer.

2. A process according to claim 1, wherein a step of placing a preliminarily molded key top piece upon the surface of the key base treated according to steps a) - c) is inserted before step d).

## Patentansprüche

1. Verfahren zum Herstellen einer zusammengesetzten Fingeranschlagstaste für einen von Hand betätigbaren Schalter eines Typs, in dem das Oberstück der Taste aus einem anderen Harz hergestellt ist als das Tastenunterstück, gekennzeichnet durch die folgenden Schritte:
a) Behandeln der Oberfläche des geformten Tastenunterstücks aus Siliconkautschuk, das mit der obersten Tastenschicht gebondet werden soll, entweder durch Bestrahlung desselben mit einer oder mehreren kurzwelligen UV-Strahlungen im Bereich von 150 nm - 270 nm, oder durch Einwirken einer Plasmaentladung auf dasselbe, um die Oberfläche chemisch zu aktivieren,
b) Aufbringen eines Kupplungsmittels auf Silan-Basis auf die so behandelte Oberfläche des Tastenunterstücks,
c) Aufbringen einer Schicht einer geeigneten Konfiguration aus einem unter UV-Bestrahlung oder unter Wärme aushärtbaren Harz auf dieselbe, und
d) Bestrahlung dieser Harzschicht mit einer UV-Strahlung oder Erwärmen derselben, um das Aushärten dieser Harzschicht zu bewirken.

2. Ein Verfahren gemäß Anspruch 1, wobei vor dem Schritt d) ein Schritt zum Aufbringen eines vorläufig ausgeformten Tastenoberstücks auf die Oberfläche des gemäß den Schritten a) - c) behandelten Tastenunterstücks eingefügt wird.

## Revendications

1. Procédé pour la production d'une touche composite pour un interrupteur de manipulation d'un type dans lequel la partie supérieure de la touche est fabriquée dans une résine différente de celle de la pièce de base de la touche, caractérisé par les étapes consistant à :
a) traiter la surface de la base moulée de la touche fabriquée dans un caoutchouc silicone devant être soudée à la couche supérieure de la touche soit en l'exposant à un ou plusieurs rayon(s) ultraviolet(s) à longueur d'onde courte comprisedans la gamme allant de 150 nm à 270 nm, soit en l'exposant à une décharge de plasma afin de soumettre la surface à une activation chimique ;
b) appliquer ensuite un agent de pontage à base de silane à la surface ainsi traitée de la pièce de base de la touche ;
c) fournir sur celle-ci une couche ayant une configuration adéquate d'une résine vulcanisée par rayonnement U.V. ou par chauffage ; et
d) exposer ladite couche de résine à un rayonnement U.V. ou au chauffage pour provoquer la vulcanisation de ladite couche de résine.

2. Procédé selon la revendication 1, dans lequel une étape consistant à placer une pièce supérieure de touche préalablement moulée sur la surface de la base de la touche traitée selon les étapes a) à c) est insérée avant l'étape d).
